# EUROPÄISCHE PATENTSCHRIFT

(11) **EP 1 743 304 B1**
(45) Veröffentlichungstag und Bekanntmachung des Hinweises auf die Patenterteilung: **07.07.2010**
(21) Anmeldenummer: 04718649.9
(22) Anmeldetag: 09.03.2004
(51) Int. Cl.: G07C 5/00

(54) **DOKUMENTATION VON SERVICEMASSNAHMEN AN EINEM KRAFTFAHRZEUG**
DOCUMENTATION FOR A MOTOR VEHICLE SERVICE MEASURES
DOCUMENTATION DE PRESCRIPTIONS DE SERVICE POUR UN VEHICULE AUTOMOBILE

(43) Veröffentlichungstag der Anmeldung: 17.01.2007
(73) Patentinhaber: Bayerische Motoren Werke Aktiengesellschaft, 80809 München (DE)
(72) Erfinder: KUHLS, Burkhard, 86391 Stadtbergen (DE); KNECHTEL, Harry, 85459 Berglern (DE)
(86) Internationale Anmeldenummer: PCT/EP2004/002401
(87) Internationale Veröffentlichungsnummer: WO 2005/093668

(56) Entgegenhaltungen:
- WO-A-97/13208
- WO-A-03/058561
- US-A- 5 541 840
- US-A1- 2003 033 061
- US-A1- 2003 120 501
- US-A1- 2003 182 138
- US-A1- 2003 236 600
- US-A1- 2004 003 245
- BEUTELSPACHER, SCHWENK, WOLFENSTETTER: "Moderne Verfahren der Kryptographie" Juni 2001 (2001-06), VIEWEG VERLAG , BRAUNSCHWEIG/WIESBADEN (DE) 022413 , XP002306050 Seite 11 - Seite 22
- PATENT ABSTRACTS OF JAPAN Bd. 0071, Nr. 80 (P-215), 9. August 1983 (1983-08-09) & JP 58 083227 A (NISSAN JIDOSHA KK), 19. Mai 1983 (1983-05-19)
- REINHARD WOBST: "Abenteuer Kryptologie" 2001, ADDISON-WESLEY , MUNICH * Seite 295 *

## Beschreibung

Die Erfindung betrifft insbesondere ein Verfahren zur Dokumentation von Servicemaßnahmen an einem Kraftfahrzeug unter Verwendung eines elektronischen Speichers nach dem Oberbegriff des entsprechenden Hauptanspruchs.

Bekannt ist die Verwendung von "Fahrzeug-Scheckheften", um Wartungsarbeiten, die an dem betreffenden Fahrzeug vorgenommen worden sind, zu dokumentieren.

Die US 2003/033061 A1 beschreibt ein Verfahren, um die Wartungs- und Gewährleistungsdaten-Historie von LKWs, die in unterschiedlichsten Städten gewartet und repariert werden, stets in der aktuellen Werkstatt zur Verfügung zu haben. Es wird vorgeschlagen, dass die Service-Daten und Gewahrleistungs-Daten beim Service oder der Reparatur des Fahrzeugs erhoben, in einem portablen Computer bereitgestellt und von diesem in einen im Fahrzeug vorgesehenen Onboard-Computer übertragen werden.

Die WO 97/13208 A beschreibt ein elektronisches LKW-Fahrtenbuch bzw. Fahrzeug-Logbuch. In einem Fahrzeug-Boardcomputer werden für den Betrieb des Fahrzeugs relevante Daten in gehashter und asymmetrisch verschlüsselter Form abgelegt. In dem Fachbuch "Abenteuer Kryptologie" (2001) wird auf Seite 295 ein Verfahren zum Unterzeichnen mit einer Einweg-Hashfunktion beschrieben.

Die Erfindung beschäftigt sich insbesondere mit der Aufgabe ein zuverlässiges Verfahren zur Dokumentation von Servicemaßnahmen, die an einem Kraftfahrzeug vorgenommen worden sind, unter Verwendung eines elektronischen Speichers bereitzustellen. Vorteilhafte Ausgestaltungen der Erfindung sind in den abhängigen Patentansprüchen angegeben.

Ein wesentlicher Aspekt des erfindungsgemäßen Verfahrens besteht darin, in einem ersten Schritt einen Hash-Wert von einem Eintrag zu erzeugen, der mindestens eine konkrete Servicemaßnahme, vorzugsweise im Klartext, angibt. Die Erzeugung von Hash-Werten durch verschiedene Verfahren ist dem Fachmann bekannt und braucht daher hier nicht näher erläutert zu werden. Bei dieser Servicemaßnahme handelt es sich beispielsweise um einen Ölwechsel, den Austausch eines Verschleißtells und/oder eine Fahrzeug-Inspektion.

In einem zweiten Schritt wird der Hash-Wert des Eintrags mit einem persönlichen Schlüssel im Rahmen eines Public-Key-Verfahrens verschlüsselt und dem Eintrag zugeordnet bzw. mit diesem im elektronischen Speicher gespeichert.

In einem dritten Schritt wird der Eintrag für die Servicemaßnahme, vorzugsweise im Klartext, der verschlüsselte Hash-Wert und ein Zertifikat des Schlüsselinhabers in den elektronischen Speicher eingeschrieben bzw. hierin gespeichert. Das Zertifikat weist zumindest den zu dem persönlichen Schlüssel komplementären öffentlichen Schlüssel und nähere Angaben zum Schlüsselinhaber auf.

Die Speicherung des verschlüsselten Hash-Werts erfolgt bei einer Ausgestaltung der Erfindung dergestalt, dass der verschlüsselte Hash-Wert nicht gegen einen anderen Hash-Wert ausgetauscht werden kann.

Ein weiterer wesentlicher Aspekt der Erfindung besteht darin, dass zur Überprüfung der Unverfälschtheit des Eintrags in einem vierten Schritt erneut der Hash-Wert für den Eintrag, der die konkrete Servicemaßnahme angibt, erzeugt wird. In einem fünften Schritt wird der in den elektronischen Speicher eingeschriebene verschlüsselte Hash-Wert mit dem im Zertifikat angegebenen öffentlichen Schlüssel entschlüsselt. In einem sechsten Schritt wird der entschlüsselte Hash-Wert mit dem erneut erzeugten Hash-Wert verglichen. Stimmen beide Hash-Werte überein, gilt der Eintrag als unverfälscht.

Bei einer Ausführungsform der Erfindung ist vorgesehen, dass der Hash-Wert eine Bit-Quersumme ist, insbesondere eine Bit-Quersumme des Eintrags für die konkrete Servicemaßnahme. Dies ist in technisch unaufwändiger Weise zu realisieren, z.B. durch eine Vorrichtung im Kraftfahrzeug, die einen Hash-Wert des Eintrags erzeugt, wie insbesondere eine Bit-Quersumme.

Alternativ oder ergänzend ist bei einer Ausführungsform der Erfindung vorgesehen, dass zu dem Eintrag für die konkrete Servicemaßnahme das aktuelle Datum und der aktuelle Kilometerstand des Kraftfahrzeugs zum Zeitpunkt der Servicemaßnahme und der Hash-Wert mindestens für den Eintrag, das Datum und den Kilometerstand in dem elektronischen Speicher gespeichert wird.

Über den Hash-Wert mindestens für den Eintrag, der die Servicemaßnahme bezeichnet, das Datum und den Kilometerstand, wird eine Manipulation an diesen den Zustand eines Fahrzeugs charakterisierenden Daten einfach aber dennoch sehr wirksam verhindert.

Alternativ oder ergänzend ist bei einer anderen Ausführungsform der Erfindung vorgesehen, dass der elektronische Speicher in dem Kraftfahrzeug, insbesondere in einem Steuergerät des Kraftfahrzeugs, und/oder in einem entfernbaren mobilen Datenträger im Kraftfahrzeug, wie insbesondere eine Chipkarte, und/oder in einer fahrzeugexternen Vorrichtung, insbesondere beim Hersteller des Kraftfahrzeugs, vorgesehen ist.

An der Verwendung eines elektronischen Speichers, der im Kraftfahrzeug angeordnet ist, ist von Vorteil, dass er auch bei einem Verkauf des Fahrzeugs in diesem verbleibt und/oder bei jedem Werkstattbesuch des Fahrzeugs zum Einspeichern der Service- bzw. Wartungsmaßnahme durch einen Service-Techniker in der Werkstatt zur Verfügung steht. Der Inhalt des elektronischen Speichers kann beispielsweise für den Fahrzeughalter über ein im Fahrzeug vorgesehenes Display bzw. einen Fahrzeug-Computer zu Kontroll- und/oder zu sonstigen Zwecken, z.B. bei einem Verkaufsgespräch über das Fahrzeug, ausgegeben werden.

An der Verwendung einer Chipkarte ist von Vorteil, dass die Dokumentation von Servicemaßnahmen bzw. der Inhalt des elektronischen Speichers außerhalb des Fahrzeugs, z.B. am heimischen PC unter Verwendung eines Chipkartenlesegeräts, auf einem Bildschirm betrachtet werden kann.

Alternativ oder ergänzend erfolgt die Dokumentation der Servicemaßnahmen bei einer Ausgestaltung der Erfindung, vorzugsweise unmittelbar im Anschluss an die Service-Maßnahme, in einer fahrzeugexternen Vorrichtung, insbesondere beim Hersteller des Kraftfahrzeugs. Hierdurch erfolgt die Überprüfung der Übereinstimmung der beiden Hash-Werte beim Fahrzeughersteller oder einer von ihm beauftragten Institution, in sicherer und verlässlicher Umgebung.

Alternativ oder ergänzend ist bei einer Ausgestaltung der Erfindung vorgesehen, dass die Servicemaßnahme, das Datum der Servicemaßnahme, der aktuelle Kilometerstand zum Zeitpunkt der Servicemaßnahme und das Zertifikat im Klartext im elektronischen Speicher gespeichert wird. Hiermit ist bereits eine weitgehend ausreichende Dokumentation von Servicemaßnahmen in an sich unverfälschbarer Weise möglich.

Alternativ oder ergänzend ist ist bei einer Ausführungsform der Erfindung vorgesehen, dass die Erzeugung und/oder Verschlüsselung des Hash-Werts unter Verwendung des persönlichen Schlüssels einer Werkstatt und/oder eines Service-Technikers vorgenommen wird, wobei dieser vorzugsweise eine Chipkarte verwendet, in der bevorzugt mindestens der persönliche Schlüssel gegen unbefugtes Auslesen gesichert gespeichert worden ist.

Bei Verwendung des bekannten Public-Key-Verfahrens bzw. bei Verwendung eines persönlichen Schlüssels, eines dazu komplementären öffentlichen Schlüssels und eines Zertifikats, mit dem ein sogenanntes Trust-Center bestätigt, dass der öffentliche Schlüssel dem in dem Zertifikat angegebenen Schlüsselinhaber zugeordnet ist, lässt sich in zuverlässiger Weise die Authentizität der Daten der Servicemaßnahmen sicherstellen. Es lässt sich also zweifelsfrei ermitteln, wer bestätigt, was, wann, in welcher Werkstatt oder dgl. am Fahrzeug vorgenommen worden ist.

Alternativ oder ergänzend ist bei einer weiteren Ausführungsform der Erfindung vorgesehen, dass der Inhalt des elektronischen Speichers, insbesondere die in dem elektronischen Speicher gespeicherten Servicemaßnahmen, auf einem im Kraftfahrzeug vorgesehenen Bildschirm und/oder auf einem in einer Werkstatt bzw. bei einem Fahrzeughändler befindlichen Bildschirm und/oder auf dem Bildschirm eines PCs im häuslichen Bereich zur Anzeige gebracht werden.

Durch diese Maßnahmen kann die Dokumentation in flexibler Weise stets dann, wenn sie benötigt wird, angezeigt werden.

Alternativ oder ergänzend ist bei einer Ausführungsform der Erfindung vorgesehen, dass die erneute Bildung des Hash-Werts, die Entschlüsselung des verschlüsselten, bereits gebildeten Hash-Werts und der Vergleich der beiden Hash-Werte im Kraftfahrzeug, und/oder in der Werkstatt bzw. bei dem Fahrzeughändler und/oder beim Fahrzeughersteller oder einer für ihn tätigen Organisation und/oder von dem PC im häuslichen Bereich durchgeführt wird.

Hierdurch kann dem Fahrzeughalter in flexibler Weise eine Überprüfung der Authentizität der Dokumentation von Servicemaßnahmen im "elektronischen Scheckheft" des Fahrzeugs angeboten werden.

Die Erfindung ermöglicht ferner die Bereitstellung einer Vorrichtung zur Dokumentation von Servicemaßnahmen an einem Kraftfahrzeug unter Verwendung eines elektronischen Speichers, bei der die Vorrichtung ein Verfahren nach einem der vorstehenden Verfahrensansprüche ausführt.

Zudem ermöglicht die Erfindung die Bereitstellung eines Computer-Programm-Produkts zur Dokumentation von Servicemaßnahmen an einem Kraftfahrzeug unter Verwendung eines elektronischen Speichers, bei dem das Computer-Programm-Produkt die Ausführung eines Verfahrens nach einem der vorstehenden Verfahrensansprüche veranlasst.

## Patentansprüche

1. Verfahren zur Dokumentation von Servicemaßnahmen an einem Kraftfahrzeug unter Verwendung eines elektronischen Speichers mit den folgenden Schritten:
- Erzeugen eines Hash-Werts von einem Eintrag, der mindestens eine konkrete Servicemaßnahme angibt,
- Verschlüsseln des Hash-Werts mit einem persönlichen Schlüssel im Rahmen eines Public-Key-Verfahrens,
- Einschreiben des Eintrags, des verschlüsselten Hash-Werts und eines Zertifikats, das im Klartext mindestens den zu dem persönlichen Schlüssel komplementären öffentlichen Schlüssel und Daten zum Schlüsselinhaber aufweist, in den elektronischen Speicher, und
zur Überprüfung der Unverfälschtheit des Eintrags:
- erneut der Hash-Wert für den Eintrag, der die konkrete Servicemaßnahme angibt, erzeugt wird,
- der in den elektronischen Speicher eingeschriebene verschlüsselte Hash-Wert mit dem im Zertifikat angegebenen öffentlichen Schlüssel entschlüsselt wird,
- der entschlüsselt Hash-Wert mit dem erneut erzeugten Hash-Wert verglichen wird, und
- der Eintrag als unverfälscht gilt, wenn beide Hash-Werte übereinstimmen.

2. Verfahren nach Anspruch 1, **dadurch gekennzeichnet, dass** der Hash-Wert weitgehend eine Bit-Quersumme ist, insbesondere des Eintrags für die konkrete Servicemaßnahme.

3. Verfahren nach Anspruch 1 oder 2, **dadurch gekennzeichnet, dass** zu dem Eintrag für die konkrete Servicemaßnahme das aktuelle Datum und der aktuelle Kilometerstand des Kraftfahrzeugs zum Zeitpunkt der Servicemaßnahme und der Hash-Wert mindestens für den Eintrag, das Datum und den Kilometerstand in dem elektronischen Speicher gespeichert wird.

4. Verfahren nach einem der Ansprüche 1 bis 3, **dadurch gekennzeichnet, dass** der elektronische Speicher in dem Kraftfahrzeug, insbesondere in einem Steuergerät des Kraftfahrzeugs, und/oder in einem entfernbaren mobilen Datenträger im Kraftfahrzeugs, wie insbesondere eine Chipkarte, und/oder in einer fahrzeugexternen Vorrichtung, insbesondere beim Hersteller des Kraftfahrzeugs, vorgesehen ist.

5. Verfahren nach einem der Ansprüche 1 bis 4, **dadurch gekennzeichnet, dass** die Servicemaßnahme, das Datum der Servicemaßnahme, der aktuelle Kilometerstand zum Zeitpunkt der Servicemaßnahme und das Zertifikat im Klartext im elektronischen Speicher gespeichert wird.

6. Verfahren nach einem der Ansprüche 1 bis 5, **dadurch gekennzeichnet, dass** die Erzeugung und/oder Verschlüsselung des Hash-Werts unter Verwendung des persönlichen Schlüssels einer Werkstatt und/oder eines Service-Technikers vorgenommen wird, wobei dieser vorzugsweise eine Chipkarte verwendet, in der mindestens der persönliche Schlüssel gegen unbefugtes Auslesen gesichert gespeichert worden ist.

7. Verfahren nach einem der Ansprüche 1 bis 6, **dadurch gekennzeichnet, dass** der Inhalt des elektronischen Speichers, insbesondere die in dem elektronischen Speicher gespeicherten Servicemaßnahmen, auf einem im Kraftfahrzeug vorgesehenen Bildschirm und/oder auf einem in einer Werkstatt bzw. bei einem Fahrzeughändler befindlichen Bildschirm und/oder auf dem Bildschirm eines PCs im häuslichen Bereich zur Anzeige gebracht werden.

8. Verfahren nach einem der Ansprüche 1 bis 7, **dadurch gekennzeichnet, dass** die erneute Bildung des Hash-Werts, die Entschlüsselung des verschlüsselten, bereits gebildeten Hash-Werts und der Vergleich der beiden Hash-Werte im Kraftfahrzeug, und/oder in der Werkstatt bzw. bei dem Fahrzeughändler und/oder von dem PC im häuslichen Bereich durchgeführt wird.

9. Vorrichtung zur Dokumentation von Servicemaßnahmen an einem Kraftfahrzeug unter Verwendung eines elektronischen Speichers wobei die Vorrichtung ein Verfahren nach einem der vorstehenden Verfahrensansprüche ausführt.

10. Computer-Programm-Produkt zur Dokumentation von Servicemaßnahmen an einem Kraftfahrzeug unter Verwendung eines elektronischen Speichers wobei das Computer-Programm-Produkt die Ausführung eines Verfahrens nach einem der vorstehenden Verfahrensansprüche veranlasst.

## Claims

1. A method for documenting motor vehicle service measures using an electronic memory, comprising the following steps:
- generating a hash value of an entry which identifies at least one specific service measure,
- encrypting the hash value using a personal key in the framework of a public-key method,
- inputting the entry, the encrypted hash value and a certificate, which has in plain text at least the public key complementary to the personal key and data on the key holder, into the electronic memory and
to verify the authenticity of the entry:
- the hash value for the entry, which identifies the specific service measure, is again generated,
- the encrypted hash value input into the electronic memory is decrypted using the public key identified in the certificate,
- the decrypted hash value is compared with the newly generated hash value and
- the entry is considered to be authentic if the two hash values match.

2. A method according to claim 1, **characterised in that** the hash value is substantially a bit cross-check sum, more especially of the entry for the specific service measure.

3. A method according to claim 1 or 2, **characterised in that** the current date and the current kilometre reading of the motor vehicle at the time of the service measure with respect to the entry for the specific service measure, and the hash value at least for the entry, the date and the kilometre reading are stored in the electronic memory.

4. A method according to any one of claims 1 to 3, **characterised in that** the electronic memory is provided in the motor vehicle, more especially in a control apparatus of the motor vehicle, and/or in a removable mobile data carrier in the motor vehicle, such as, more especially a chip card, and/or in a device external to the vehicle, more especially at the premises of the producer of the motor vehicle.

5. A method according to any one of claims 1 to 4, **characterised in that** the service measure, the data of the service measure, the current kilometre reading at the time of the service measure and the certificate are stored in plain text in the electronic memory.

6. A method according to any one of claims 1 to 5, **characterised in that** the generation and/or encryption of the hash value is carried out using the personal key of a workshop and/or a service engineer, the latter preferably using a chip card, in which at least the personal key has been stored, secured against unauthorised reading.

7. A method according to any one of claims 1 to 6, **characterised in that** the content of the electronic memory, more especially the service measures stored in the electronic memory are displayed on a screen provided in the motor vehicle and/or on a screen located in a workshop or at a vehicle dealer's and/or on the screen of a PC in a household area.

8. A method according to any one of claims 1 to 7, **characterised in that** the renewed formation of the hash value, the decryption of the encrypted, already formed hash value and the comparison of the two hash values is carried out in the motor vehicle and/or in the workshop or at the vehicle dealer's and/or by the PC in the domestic area.

9. A device for documenting motor vehicle service measures using an electronic memory, wherein the device carries out a method according to any one of the preceding method claims.

10. A computer programme product for documenting motor vehicle service measures using an electronic memory, wherein the computer programme product initiates the carrying out of a method according to any one of the preceding method claims.

## Revendications

1. Procédé de documentation de prescriptions de service pour un véhicule automobile utilisant une mémoire électronique, comprenant les étapes suivantes :
- on génère une valeur de hachage de l'entrée indiquant au moins une requête de service pratique,
- on code la valeur de hachage avec un code personnel dans le cadre d'un procédé de codage publique par clé,
- on inscrit comme entrée dans la mémoire électronique, la valeur de hachage codée et un certificat ayant en texte clair la clé publique complémentaire à la clé personnelle et des données concernant le titulaire de la clé, et
pour contrôler l'intégrité de l'entrée :
- on génère de nouveau la valeur de hachage entrée indiquant la prescription de service pratique, et
- on décode la valeur de hachage codée, enregistrée dans la mémoire électronique avec la clé publique contenue dans le certificat,
- on compare la valeur de hachage décodée à la valeur de hachage générée de nouveau, et
- l'entrée est considérée comme intègre si les deux valeurs de hachage se correspondent.

2. Procédé selon la revendication 1,
**caractérisé en ce que**
la valeur de hachage est dans une large mesure une somme transversale de bit, notamment de l'entrée pour la prescription de service pratique.

3. Procédé selon la revendication 1 ou 2,
**caractérisé en ce qu'**
en plus de l'entrée de la prescription de service pratique, on mémorise dans la mémoire électronique, la date actuelle et le kilométrage actuel du véhicule à l'instant de la prescription de service, et la valeur de hachage au moins de l'entrée, la date et le kilométrage.

4. Procédé selon l'une des revendications 1 à 3,
**caractérisé en ce que**
la mémoire électronique du véhicule automobile est notamment celle de l'appareil de commande du véhicule et/ou celle d'un support de données, mobile, amovible du véhicule, notamment une carte à puce et/ou un dispositif externe au véhicule, notamment chez le constructeur du véhicule.

5. Procédé selon l'une des revendications 1 à 4,
**caractérisé en ce que**
la prescription de service, la date de la prescription de service, le kilométrage actuel à l'instant de la prescription de service et le certificat, sont mémorisés en texte clair dans la mémoire électronique.

6. Procédé selon l'une des revendications 1 à 5,
**caractérisé en ce qu'**
on génère et/ou on code la valeur H en utilisant la clé personnelle d'un atelier et/ou d'un technicien de service, et celui-ci utilise de préférence une carte à puce contenant au moins l'enregistrement du code personnel protégé contre une lecture non autorisée.

7. Procédé selon l'une des revendications 1 à 6,
**caractérisé en ce que**
le contenu de la mémoire électronique, notamment les prescriptions de service enregistrées dans la mémoire électronique, peuvent être affichées sur un écran équipant le véhicule et/ou un écran de l'atelier ou du revendeur de véhicule et/ou sur l'écran d'un PC à usage domestique.

8. Procédé selon l'une des revendications 1 à 7,
**caractérisé en ce qu'**
on forme la valeur de hachage, le décodage de la valeur de hachage codée, déjà formée et la comparaison des deux valeurs de hachage dans le véhicule et/ou dans l'atelier ou chez le revendeur de véhicule et/ou sur le PC domestique.

9. Dispositif de documentation de prescriptions de service d'un véhicule en utilisant une mémoire électronique,
le dispositif mettant en oeuvre un procédé selon l'une des revendications précédentes de procédé.

10. Produit programme d'ordinateur pour la documentation de prescriptions de service à exécuter sur un véhicule automobile en utilisant une mémoire électronique,
dans lequel le produit programme d'ordinateur exécute le procédé selon l'une des revendications précédentes.
